# EUROPEAN PATENT SPECIFICATION

(11) **EP 2 234 006 B1**
(45) Date of publication and mention of the grant of the patent: **23.01.2013**
(21) Application number: 08740634.4
(22) Date of filing: 18.04.2008
(51) Int. Cl.: G06F 3/048, G06F 12/08, G09G 5/00, G09G 5/36, G09G 5/395

(54) **GRAPHIC DISPLAY DEVICE**
GRAFISCHE ANZEIGEEINRICHTUNG
DISPOSITIF D'AFFICHAGE GRAPHIQUE

(30) Priority: 05.12.2007 JP 2007314229
(43) Date of publication of application: 29.09.2010
(73) Proprietor: Sharp Kabushiki Kaisha, Osaka-shi, Osaka 545-8522 (JP)
(72) Inventor: SASAKI, Jun, Osaka-shi Osaka 545-8522 (JP); NAKAMURA, Hiroyuki, Osaka-shi Osaka 545-8522 (JP); SAKAMOTO, Kenji, Osaka-shi Osaka 545-8522 (JP); MATSUYAMA, Satoshi, Osaka-shi Osaka 545-8522 (JP); WATANABE, Ryusuke, Osaka-shi Osaka 545-8522 (JP); UEMICHI, Akio, Osaka-shi Osaka 545-8522 (JP)
(74) Representative: Müller - Hoffmann & Partner
(86) International application number: PCT/JP2008/057579
(87) International publication number: WO 2009/072311

(56) References cited:
- EP-A1- 0 933 694
- EP-A2- 1 282 109
- JP-A- 11 088 866
- US-A1- 2006 082 600

## Description

### Field of the Invention

The present invention relates to a display apparatus for displaying graphic information and a storage medium storing a program for executing such processing.

### Background Art

Generally, in a display apparatus for displaying graphic information, when displaying the graphic information stored on the network, in order to enable smooth displaying, the graphic information is stored on a memory capable of high-speed read/write of data in comparison with nonvolatile storage such as HD (hard disk). However, since it is difficult to acquire all graphic information from the memory having a capacity limit, necessary information is acquired accordingly from nonvolatile storage inside the display apparatus or a sever on a network or an external electronic device such as HD, thereby preliminarily acquiring information prior or subsequent to the displayed information.

Additionally, in a display apparatus disclosed in Japanese Unexamined Patent Application Publication No. 2005-156626, in order to display received information more visible on a mobile phone, suitable scrolling increments and timing of scrolls are determined according to the display and processing ability of the mobile phone on the receiving-end, thereby making all display data to be reproduced as viewable.
Patent Reference 1: Japanese Unexamined Patent Application Publication No. 2005-156626

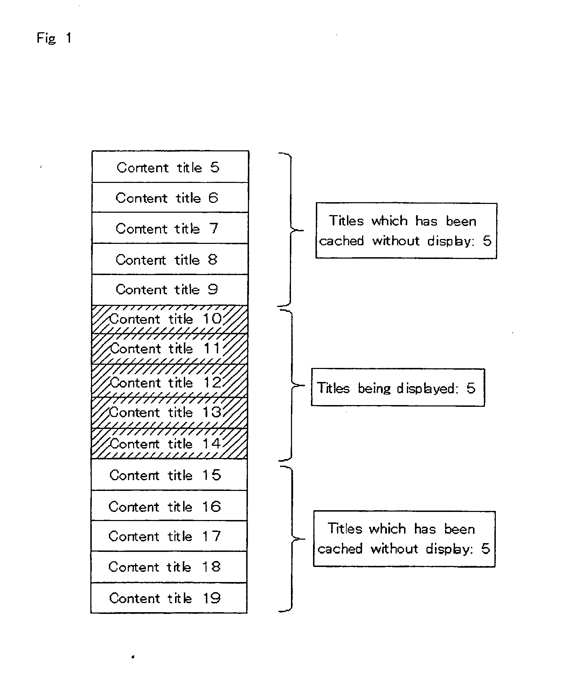

An example of a display apparatus which acquires the information prior or subsequent to the displayed information is described with reference to the case of displaying information of content list acquired from a server on the network on a display screen. The content list includes a lot of title information, so that, by and large, it is difficult to display all content title information on the display screen. Therefore, a user views the displayed information of the list operating a scroll bar or an up-down key. Here, the display apparatus preliminarily stores in the memory not only the content title information displayed on the display screen but also content title information previous or subsequent to the displayed content title information. Fig. 1 is an illustration of a state of storing partial information of the content list in the memory. As shown in Fig. 1, not only information of content titles 10 to 14, which are displayed on the display screen, but also information of content titles 15 to 19, which are subsequent to the information, are stored in the memory.

EP-A-0933964 discloses a high-definition image display apparatus that displays a high-definition mega-sized image on a computer display.

### Disclosure of the Invention

### Problems that the Invention Tries to Solve

However, even by using the above technologies, in cases where the user does specific operation successively and at high-speed, it is impossible to compensate with the information preliminarily stored in the memory, so that it is necessary to acquire information for display from the sever on the network, the external electronic device such as HD or the nonvolatile storage inside the display apparatus. Therefore, the user is made to wait until the information, which the user needs, is displayed, so that it is difficult to reflect the high-speed operations on the display of graphic.

### Means for Solving the Problems

The above objects are achieved by the claimed matter according to the independent claims.

In order to solve the above deficiencies, in a display apparatus of the present invention, caching of the graphic information, which can be used for display, is carried out according to the user's operation history concerning the graphic.

### Effects of the Invention

According to the display apparatus of the present invention, based on a tendency of the user's operations concerning the graphics, look-ahead caching of the graphic information, which can be used for display in the future, is carried out, thereby enabling smooth display of the graphics in response to the successive and high-speed operations without sufficient capacity of storage area in a memory to store the cache information.

### BRIEF DESCRIPTION OF THE DRAWINGS

Fig. 1 is an illustration of a state of storing partial information of a content list in the conventional apparatus.
Fig. 2 is a functional block diagram of a display apparatus of a first embodiment.
Fig. 3 is a diagram showing an example of an operation history stored in the storage for operation history of the display apparatus of the first embodiment.
Fig. 4 is a schematic diagram showing an example of a hardware configuration of the display apparatus of the first embodiment.
Fig. 5 is a flowchart showing processes in the display apparatus of the first embodiment.
Fig. 6 is a functional block diagram of a display apparatus of a second embodiment.
Fig. 7 is an illustration of a state of storing partial information of a content list in the display apparatus of the second embodiment.
Fig. 8 is a schematic diagram showing an example of a hardware configuration of the display apparatus of the second embodiment.
Fig. 9 is a flowchart showing processes in the display apparatus of the second embodiment.
Fig. 10 is a functional block diagram of a display apparatus of a third embodiment.
Fig. 11 is a schematic diagram showing an example of a hardware configuration of the display apparatus of the third embodiment.
Fig. 12 is a flowchart showing processes in the display apparatus of the third embodiment.
Fig. 13 is a functional block diagram of a display apparatus of a fourth embodiment.
Fig. 14 is a schematic diagram showing an example of a hardware configuration of the display apparatus of the fourth embodiment.
Fig. 15 is a flowchart showing processes in the display apparatus of the fourth embodiment.
Fig. 16 is a functional block diagram of a display apparatus of a fifth embodiment.
Fig. 17 is a diagram showing temporal variation of cache memory area allocated according to an operation history in the display apparatus of the fifth embodiment.
Fig. 18 is a schematic diagram showing an example of a hardware configuration of the display apparatus of the fifth embodiment.
Fig. 19 is a flowchart showing processes in the display apparatus of the fifth embodiment.
Fig. 20 is a functional block diagram of a display apparatus of a sixth embodiment.
Fig. 21 is a diagram showing shifting rates stored as the operation history in the display apparatus of the sixth embodiment.
Fig. 22 is a schematic diagram showing an example of a hardware configuration of the display apparatus of the sixth embodiment.
Fig. 23 is a flowchart showing processes in the display apparatus of the sixth embodiment.
Fig. 24 is a functional block diagram of a display apparatus of a seventh embodiment.
Fig. 25 is a diagram showing information calculated from a relation with screen ID in the display apparatus of the seventh embodiment.
Fig. 26 is a schematic diagram showing an example of a hardware configuration of the display apparatus of the seventh embodiment.
Fig. 27 is a flowchart showing processes in the display apparatus of the seventh embodiment.
Fig. 28 is a functional block diagram of a display apparatus of an eighth embodiment.
Fig. 29 is a diagram showing an example of manner of division of an area on a screen in the display apparatus of the eighth embodiment.
Fig. 30 is a diagram showing information calculated from a relation with location area in the display apparatus of the eighth embodiment.
Fig. 31 is a schematic diagram showing an example of a hardware configuration of the display apparatus of the eighth embodiment.
Fig. 32 is a flowchart showing processes in the display apparatus of the eighth embodiment.

### Description of Reference Numerals

0200 Display apparatus
0201 Graphic display
0202 Graphic operator
0203 Storage for operation history
0204 Look-ahead cache
0205 Determination unit for look-ahead range

### DETAILED DESCRIPTION OF THE INVENTION

Hereinbelow, embodiments of the present invention will be described. Relations between the embodiments and claims are as follows. The first embodiment will mainly describe Claims 1 and 9. The second embodiment will mainly describe Claim 2. The third embodiment will mainly describe Claim 3. The fourth embodiment will mainly describe Claim 4. The fifth embodiment will mainly describe Claim 5. The sixth embodiment will mainly describe Claim 6. The seventh embodiment will mainly describe Claim 7. The eighth embodiment will mainly describe Claim 8. The present invention is not to be limited to the above embodiments and able to be embodied in various forms without departing from the scope thereof.

### <<First Embodiment>>

### <Concept of First Embodiment>

A display apparatus of a first embodiment carries out caching of the graphic information, which can be used for display, according to the user's operation history concerning the graphic. Specifically, in cases where the user does specific operation successively and at high-speed, cache memory is preferentially allocated to the graphic information correlated with the specific operation, thereby enabling smooth display of the graphic in response to the successive and high-speed operation.

### <Configuration of First Embodiment>

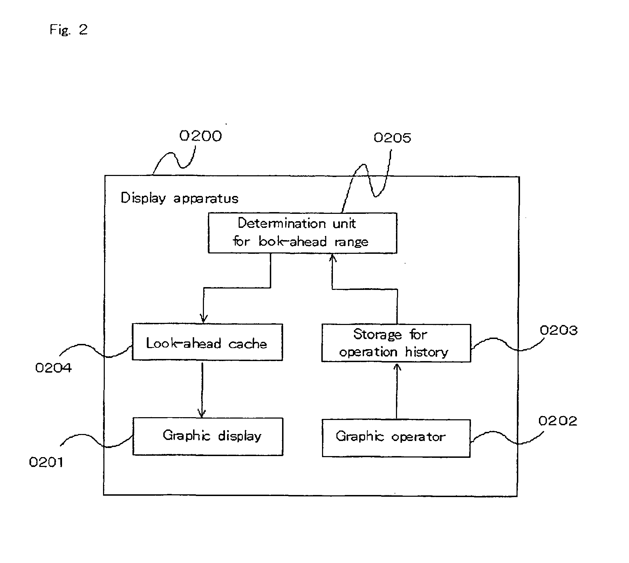

Fig. 2 is a functional block diagram of a display apparatus of the first embodiment. The respective units of the present invention can be configured by hardware, software, or both hardware and software. For example, in the case of using a computer, the respective units are implemented by the hardware configured by a CPU, a memory, a bus, an interface, and other peripheral devices etc., and by the software operable on the hardware. Concretely speaking, by sequentially carrying out programs in the memory, the data in the memory and the data inputted via the interface are processed, stored, and outputted etc., thereby implementing functions of the respective units.

In Fig. 2, a 'display apparatus' 0200 of the first embodiment comprises a 'graphic display' 0201, a 'graphic operator' 0202, a 'storage for operation history' 0203, a 'look-ahead cache' 0204, and a 'determination unit for look-ahead range' 0205. Moreover, the present invention can be implemented not only as an apparatus but also as a method (the same applies throughout the entire specification).

The 'graphic operator' is configured to receive an operation concerning a graphic displayed by the graphic display. The terms 'receive an operation concerning a graphic' means that an operation to vary display of the graphic on the display is received. Examples of the operation include an operation to move or rotate the graphic components of the display of graphic, or an operation to newly add or delete the graphic components for the display of graphic. Moreover, examples of the operation include an operation to scroll in direction of right to left or up and down or a combination of these directions (relating to the second embodiment), or an operation to scale (relating to in the third embodiment). Furthermore, examples of the operation include an operation to select a link on a web page to move from a content page on the web browser to another page, or an operation to select a reproduction button on the display screen to reproduce movie information of a film etc. stored in the electronic device connected with the display apparatus. These operations can be executed through a user interface such as a mouse, a keyboard or a tablet.

The 'storage for operation history' is configured to store operation history of the graphic. Examples of the operation history of graphic include content of each operation inputted through the I/O by the user, total number and number of successive operations, an order and date and time of each operation, and elapsed time from one operation to another operation. As a storage area for these operation histories, a part of storage area in the storage can be allocated and the area can be extended accordingly. Moreover, if a capacity etc. of the history information of the operation stored in the storage for operation history excesses a predetermined limit, it is possible to delete operations from the oldest one every time new operation is carried out by the user. Moreover, it can be varied as to how many operations in the past are stored as the operation history.

The 'look-ahead cache' is configured to carry out look-ahead caching of graphic information, which can be used for display through the graphic operation.

The term 'graphic information, which can be used for display through the graphic operation' is, for example, graphic information, which is unnecessary for the display at this time, but becomes necessary to be acquired due to operation such as moving, in the case of an operation to move or rotate the graphic components configuring the display of graphic. Moreover, in the case of operation to add or delete the graphic components for the display of graphic, the information is graphic information, which becomes necessary to be acquired due to the operation such as addition. For example, in the case of automatic addition and display of specific graphic components according to a state of the graphic components, for which the operation is done, the information of graphic components to be added and displayed due to further operation can be used for the display.

Moreover, in the case of the operation to scroll in the direction of right to left or up and down or a combination of these directions, the graphic information, which is not displayed at this time but is later displayed as a result of the scrolling, can be used for the display (relating to the second embodiment). Similarly, in the case of the operation to scale the display area of the graphic, the graphic information of detail, which is not displayed at this time but is later displayed as a result of scaling up, or the graphic information, which is not displayed at this time but is later added as a new area as a result of scaling down, can be used for the display (relating to the third embodiment).

Moreover, in the case of the operation to select a link 1 on a web page A to move from a content page A on the web browser to another page B, it is expected to do an operation to select another link 2 on page B. Therefore, the graphic information of a content page C correlated with the link 2 can be used for the display.

The term 'look-ahead caching of graphic information' means that the information, which is unnecessary for display at this time but can be displayed, is preliminarily stored in the memory of the display apparatus as the cache data. Therefore, smooth display of the graphics can be executed in response to the successive and high-speed operation. Here, for example, the graphic information to be stored in the memory may be received from a broadcast station or an external server, or may be acquired from an electronic device such as a HDD or a DVD-HD, connected with the display apparatus, or an internal storage.

The 'determination unit for look-ahead range' is configured to determine information range to be looked ahead according to the operation history. The term 'determine information range to be looked ahead according to the operation history' means that the acquisition range of the graphic information, which is determined based on the operation history to be necessary to be preliminarily stored in the memory, is determined.

Hereinbelow, for convenience sake, a display memory area for storing the graphic information being currently displayed and a cache memory area for storing the graphic information in the look-ahead range are described separately. However, such separation is not always necessary as the actual configuration of the apparatus.

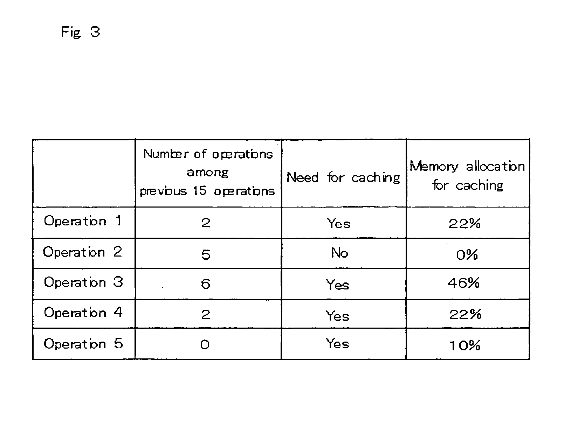

As an example, a description of a determination method for look-ahead range when there is an operation history for the previous 15 operations as shown in Fig. 3 is provided. Here, it is assumed that the graphic operations 1 to 5 can be executed. In the previous 15 operations, the number of executions of operation 1 is 2, the number of executions of operation 2 is 5, the number of executions of operation 3 is 6, the number of executions of operation 4 is 2, and the number of executions of operation 5 is 0. At the outset, operations 1 to 5 are separated into individual operations, having the necessity of caching the graphic information correlated therewith, and an operation, not having the necessity of caching the graphic information correlated therewith, and the cache memory is allocated only to the graphic information correlated with the operation having the necessity of caching. In this method, 10% of the cache memory is evenly allocated irrespective of the operation history, and 60% is allocated to the operations 1, 3, 4, and 5 in proportion to the number of executions of each operation. Therefore, it is possible to secure minimum cache area for each operation in the memory, and to allocate the cache memory to each operation according to the operation history. Such determination of look-ahead range may be executed with respect to each operation, and may be executed with respect to each predetermined number of operations.

### <Concrete Configuration of First Embodiment>

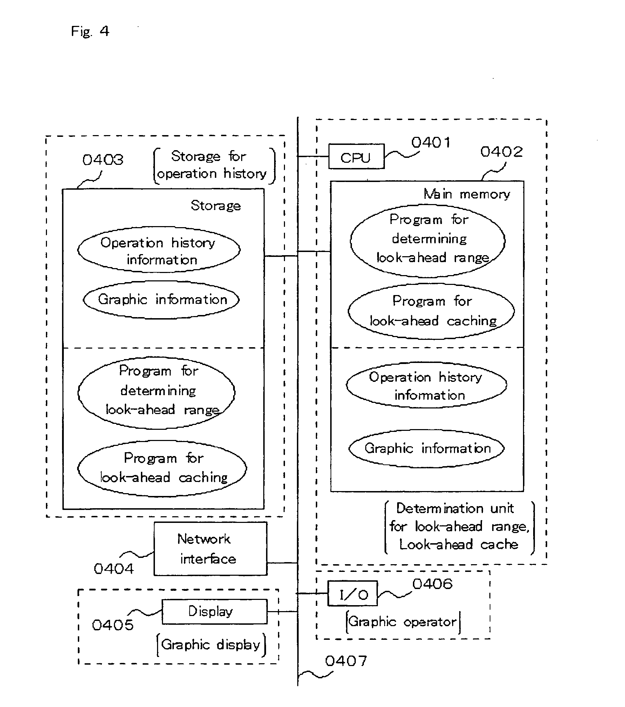

Subsequently, the respective hardware configurations of the display apparatus of the first embodiment will be described. Fig. 4 is a schematic diagram showing an example of a hardware configuration of the display apparatus of the first embodiment. As shown in Fig. 4, the look-ahead cache and determination unit for look-ahead range comprise a 'CPU' 0401 and a 'main memory' 0402. In addition, the storage for operation history comprises a 'storage (or storage medium)' (0503). Moreover, a 'network interface' 0404 for externally acquiring the graphic information is comprised, and a 'display' 0405 as the graphic display and an 'I/O' 0406 as the graphic operator are comprised. These are mutually connected through the data communication path of a 'system bus' 0407, thereby carrying out transmission/reception and processing of the information. The storage carries out nonvolatile storage of various programs executed by the CPU. The main memory provides work area used upon execution of the programs by the CPU, and temporarily stores the cached graphic information. In addition, a plurality of memory addresses are assigned to the main memory and the storage respectively, so that the program executed by the CPU specifies the memory address and accesses thereto, thereby mutually exchanging data and carrying out processing. Moreover, in the description below, although the program is preliminarily developed and resident in the work area of the main memory, it is possible to call the program from the storage as necessary. Moreover, the network interface has a function of storing the received graphic information into the storage or the main memory.

In cases where the graphic operation is executed through the I/O, the CPU executes the process for writing new operation in the operation history, and the updated operation history is stored in the storage. Here, in order to reduce writing time as much as possible, necessary operation information may be temporarily stored on the main memory, and may be written with respect to each predetermined number of operations.

For example, when it is determined that the processing for updating the operation history is executed by the CPU, the program for determining look-ahead range causes the CPU to execute calculation for determining the look-ahead range based on the numerical data of the new operation history information stored in the main memory. The determination of look-ahead range may be executed with respect to each operation, and may be executed with respect to each predetermined number of operations.

Moreover, when the program for determining look-ahead range is executed by the CPU and the look-ahead range is determined, the program for look-ahead caching outputs an instruction to acquire the graphic information in the look-ahead range indicated by the execution result to the network interface. When the network interface receives the instruction, the graphic information is acquired and stored in the main memory as the cache information.

### <Processing Flow of First Embodiment>

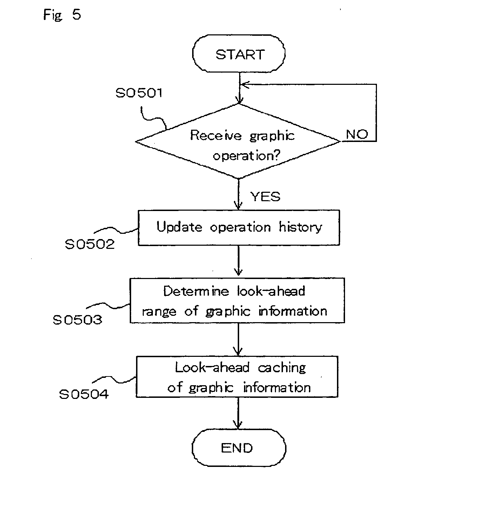

Fig. 5 is a flowchart showing processes in the display apparatus of the first embodiment. The processes in Fig. 5 include the following steps. At the outset, in step S0501, it is determined whether the graphic operation has been received. Here, if an operation not concerning graphic has been received, it can be determined that the graphic operation has not been received. Here, if it is determined that the graphic operation has been received, step S0502 is carried out. If it is determined that the graphic operation has not been received, the processing stays in a standby state. This processing is mainly carried out by the graphic operator. In step S0502, the operation history is updated based on the received graphic operation information. In step S0503, the look-ahead range of the graphic information, which can be used for display, is determined according to the updated operation history. This processing is mainly carried out by the determination unit for look-ahead range. In step S0504, look-ahead caching of the graphic information is carried out. This processing is mainly carried out by the look-ahead cache.

The above processes can be executed by the program to cause a computer to execute, and the program can be recorded in a recording medium readable by the computer (the same applies to the entire specification).

### <Brief Description of Effects of First Embodiment>

According to the display apparatus of the first embodiment, the subsequent operation is predicted based on the operations executed for the graphic in the past, and the look-ahead caching of the graphic information, which can be used for the display in the future, is executed, thereby enabling smooth display of the graphic in response to the successive and high-speed operations without sufficient capacity of storage area in a memory to store the cache information.

### <<Second Embodiment>>

### <Concept of Second Embodiment>

A display apparatus of a second embodiment is basically the same as that of the first embodiment, and is different from that of the first embodiment in carrying out look-ahead caching of graphic information for displaying a graphic, which newly appears at some point while scrolling, when the graphic operation is scrolling in a direction of right to left or up and down or a combination of these directions.

### <Configuration of Second Embodiment>

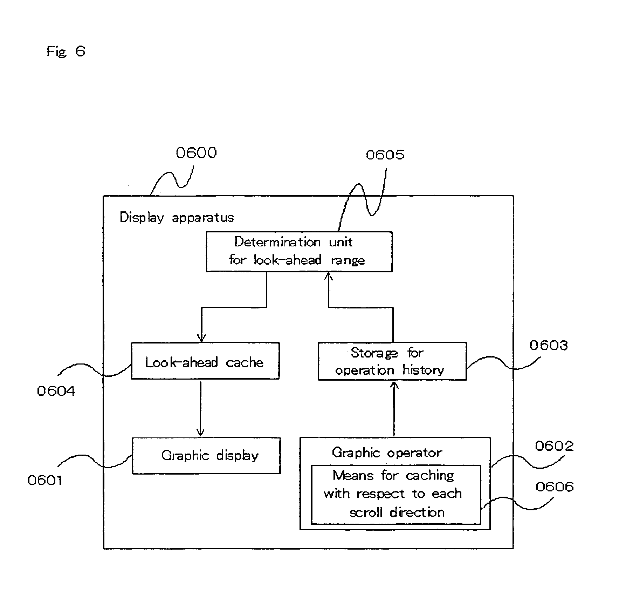

Fig. 6 is a functional block diagram of a display apparatus of the second embodiment. A 'display apparatus' 0600 of the second embodiment comprises a 'graphic display' 0601, a 'graphic operator' 0602, a 'storage for operation history' 0603, a 'look-ahead cache' 0604, and a 'determination unit for look-ahead range' 0605. The 'look-ahead cache' comprises 'means for caching with respect to each scroll direction' 0606. The configuration is basically the same as that of the apparatus of the first embodiment, so that only the means for caching with respect to each scroll direction is different from the first embodiment, and description thereof is provided hereinbelow.

The 'means for caching with respect to each scroll direction' is configured to carry out the look-ahead caching of the graphic information for displaying a graphic, which newly appears at some point while scrolling, when the graphic operation is scrolling in a direction of right to left or up and down or a combination of these directions.

When scrolling the graphic in a direction of right to left or up and down or a combination of these directions, look-ahead caching of the graphic information, which is not displayed at this time but is later displayed as a result of the scrolling, is executed.

As to the determination method for look-ahead range, when scrolling in a direction of up and down, for example, a predetermined proportion of the cache memory area (e.g., 10%) is allocated to the data in the direction of up and down irrespective of the operation history, and the remaining cache memory area is additionally allocated to the data in the direction of up and down in proportion to the number of executions of operation in each direction among multiple previous operations (e.g., 10 previous operations). Moreover, when the one operation executed successively and multiple times (e.g., 5 times), a predetermined proportion of the cache memory area (e.g., 80%) may be allocated to the data in the direction of the operation, and the remaining cache memory area may be allocated to the data in the opposite direction.

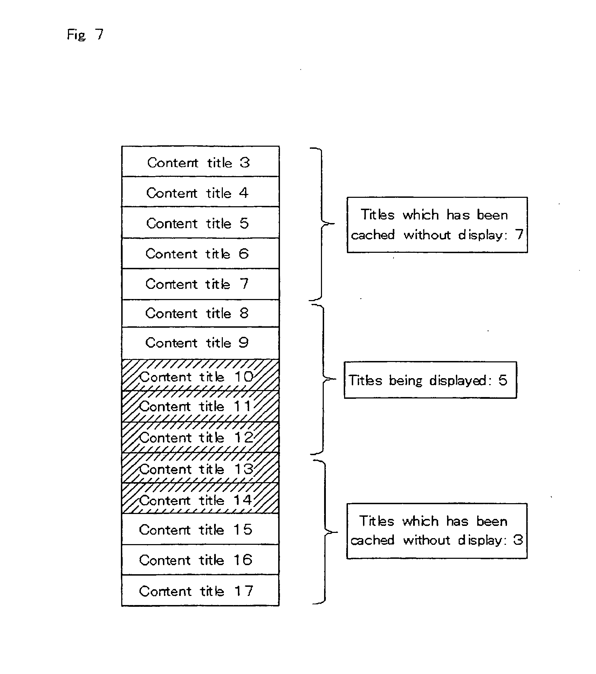

Fig. 7 is an illustration of a state of storing partial information of a content list in the display apparatus of the second embodiment when there is a strong tendency of an operation to move the display area upward. Here, information of the content titles 10 to 14 is stored in the display memory. Additionally, the determination unit for look-ahead range carries out weighting to the adjacent information in the upward direction, and determines the look-ahead range, so that non-displayed information of the content titles 3 to 9, which is adjacent in the upward direction, and non-displayed information of the content titles 15 to 17, which is adjacent in the downward direction, are stored in the cache memory. Subsequently, based on the look-ahead range, the means for caching with respect to each scroll direction executes caching of the graphic information of the content titles 3 to 9 and the graphic information of the content titles 15 to 17. In the above example, although only the description on the scrolling in the direction of up and down was provided, the same applies to the scrolling in the direction of right and left in addition to up and down.

### <Concrete Configuration of Second Embodiment>

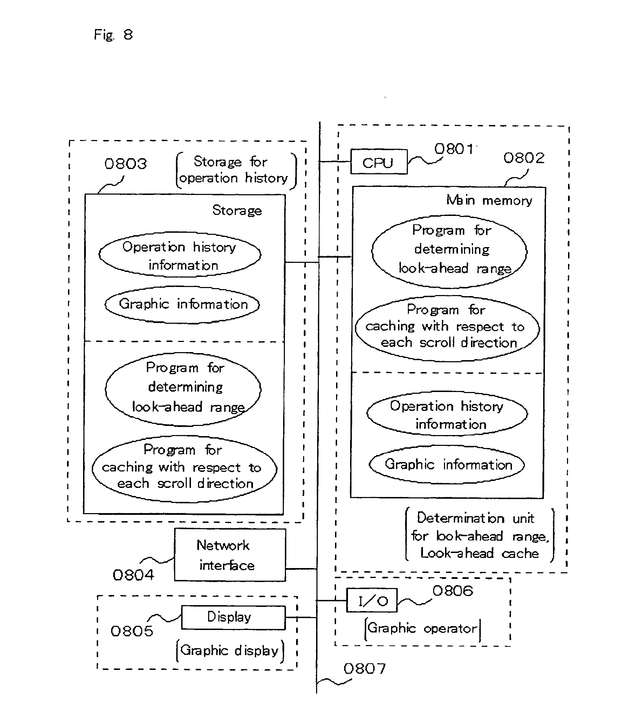

Fig. 8 is a schematic diagram showing an example of a hardware configuration of the display apparatus of the second embodiment. The configuration is basically the same as that of the apparatus of the first embodiment described with reference to Fig. 4. However, the apparatus of the second embodiment has a program for caching with respect to each scroll direction as one of the programs for look-ahead caching.

When the program for determining look-ahead range is executed by the CPU, the program for caching with respect to each scroll direction outputs an instruction to acquire the graphic information in the look-ahead range, which has been determined with respect to each scroll direction of up, down, right or left, and is indicated by the execution result. In accordance with this instruction, the graphic information is acquired through the network interface and stored in the memory. Other concrete configurations are the same as those of the display apparatus of the first embodiment, so that descriptions are omitted.

### <Processing Flow of Second Embodiment>

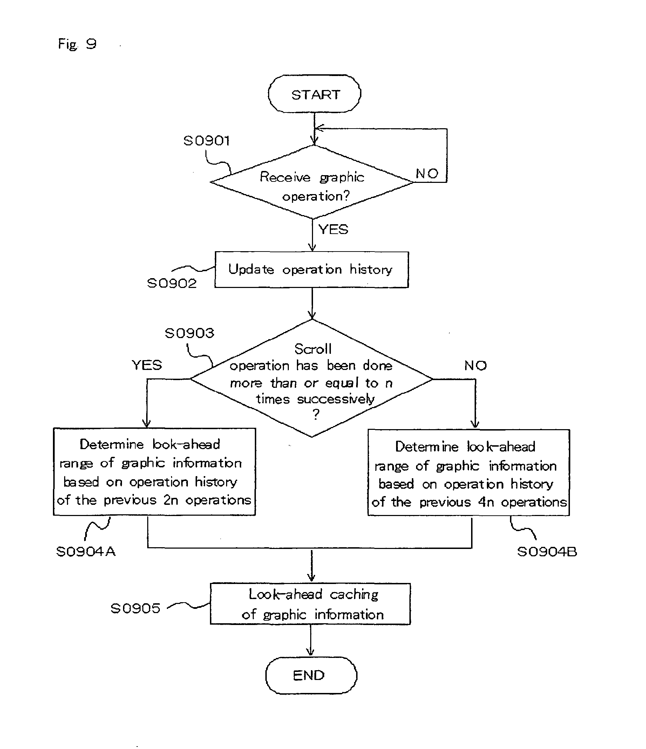

The processes in the display apparatus of the second embodiment include the same steps as those in the first embodiment. Fig. 9 is a flowchart showing processes in the display apparatus of the second embodiment. The processes in Fig. 9 include the following steps. At the outset, in step S0901, it is determined whether the graphic operation has been received. Here, if an operation not concerning graphic has been received, it can be determined that the graphic operation has not been received. Here, if it is determined that the graphic operation has been received, step S0902 is carried out. If it is determined that the graphic operation has not been received, the processing stays in a standby state. This processing is mainly carried out by the graphic operator. In step S0902, the operation history is updated based on the received graphic operation information.

In step S0903, it is determined based on the operation history that the scroll operation has been done more than or equal to n times (e.g., 5 times) successively. If so, step S0904A is carried out. If not, step S0904B is carried out. In step S0904A, the look-ahead range is determined based on the operation history of previous 2n operations. In step S0904B, the look-ahead range is determined based on the operation history of previous 4n operations. Therefore, when the scroll operation has been executed successively, by utilizing comparatively recent operation history, the successive operations are effectively reflected on the look-ahead range. This processing is mainly carried out by the determination unit for look-ahead range. In step S0905, look-ahead caching of the graphic information is carried out. This processing is mainly carried out by the look-ahead cache.

### <Brief Description of Effects of Second Embodiment>

According to the display apparatus of the second embodiment, the subsequent operation is predicted based on the operations executed for the graphic in the past, and the look-ahead caching of the graphic information, which can be used for the display in the future, is executed, thereby enabling smooth display of the graphic in response to the successive and high-speed operations without sufficient capacity of storage area in a memory to store the cache information.

### <<Third Embodiment>>

### <Concept of Third Embodiment>

A display apparatus of a third embodiment is basically same as that of the first embodiment, and is different from that of the first embodiment in carrying out look-ahead caching of graphic information for displaying a graphic, which newly appears at some point while scrolling, when the graphic operation is scaling.

### <Configuration of Third Embodiment>

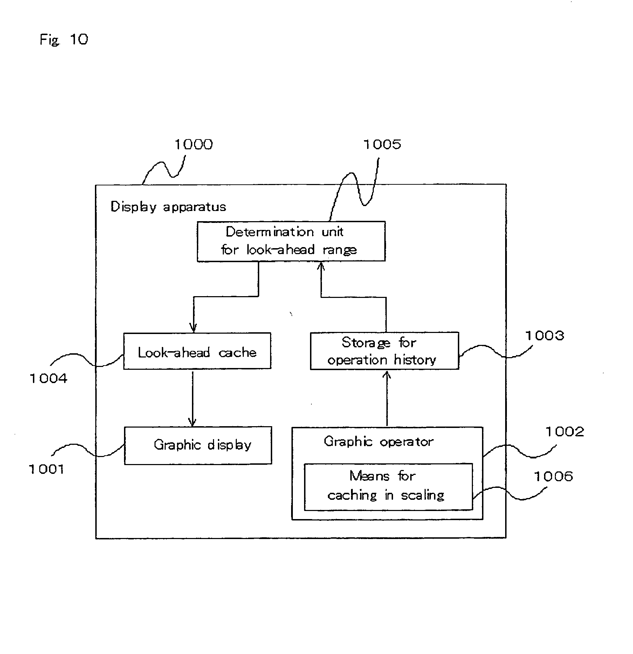

Fig. 10 is a functional block diagram of a display apparatus of the third embodiment. A 'display apparatus' 1000 of the third embodiment comprises a 'graphic display' 1001, a 'graphic operator' 1002, a 'storage for operation history' 1003, a 'look-ahead cache' 1004, and a 'determination unit for look-ahead range' 1005. The 'look-ahead cache' comprises 'means for scaling' 1006. The other configurations are basically same as those of the apparatus of the first embodiment, so that only the means for caching in scaling is different from the first embodiment, and description thereof is provided hereinbelow.

The 'means for caching in scaling' is configured to carry out the look-ahead caching of the graphic information for displaying a graphic, which newly appears at some point during scaling, when the graphic operation is scaling of the graphic.

When executing the scaling operation for the display area of the graphic, the look-ahead caching of the graphic information including detailed information, which is not displayed at this time but later becomes necessary to display as a result of the scale-up operation, or the graphic information including information of larger area, which is not displayed at this time but later becomes necessary to display as a result of the scale-down operation, is executed. For example, the case of displaying a graphic of map information including information of streets and railways etc. is described. Generally, when scaling the map area up, it is necessary to acquire the graphic information of the map including narrow streets and small shops etc. On the other hand, when scaling the map area down, it is necessary to newly acquire the graphic information of the map including peripheral area of the displayed area.

When the graphic operation is the scaling up or scaling down of the graphic, as to the determination method for look-ahead range, for example, a predetermined proportion of the cache memory area (e.g., 20%) is allocated to the graphic information, which becomes necessary to be acquired for the display due to the scale-up or scale-down operation, and the remaining cache memory area is additionally allocated to the data in the graphic information correlated with the respective operations in proportion to the number of executions of each operation among multiple previous operations (e.g., 10 prior operations). Moreover, when the one operation executed successively and multiple times (e.g., 3 times), a predetermined proportion of the cache memory area (e.g., 60%) may be allocated to the graphic information correlated with the direction of the operation, and the remaining cache memory area may be allocated to the graphic information correlated with the other operation.

### <Concrete Configuration of Third Embodiment>

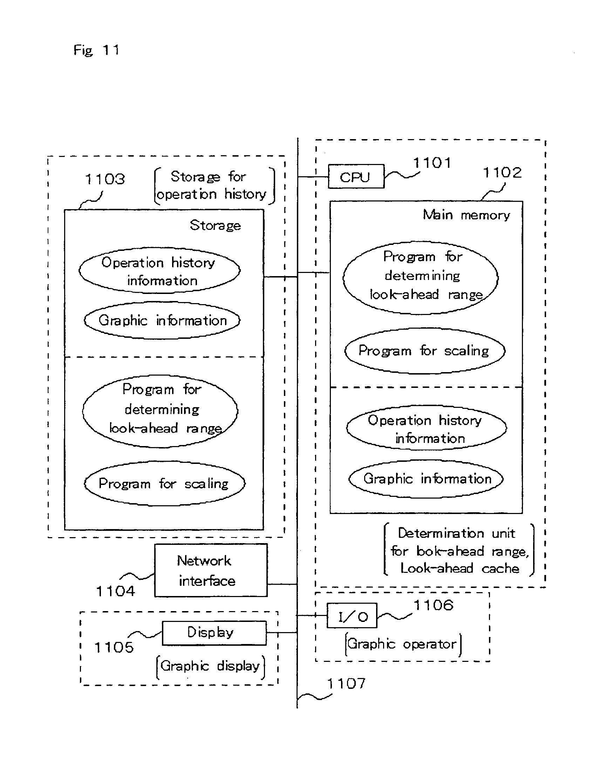

Fig. 11 is a schematic diagram showing an example of a hardware configuration of the display apparatus of the third embodiment. The configuration is basically the same as that of the apparatus of the first embodiment described with reference to Fig. 4. However, the apparatus of the third embodiment has a program for caching with respect to each scroll direction as one of the programs for look-ahead caching.

When the program for determining look-ahead range is executed by the CPU, the program for scaling outputs an instruction to acquire the graphic information, which newly appears at some point due to the scaling and is indicated by the execution result. In accordance with this instruction, the graphic information is acquired through the network interface and stored in the memory. Other concrete configurations are the same as those of the display apparatus of the first or second embodiment, so that descriptions are omitted.

### <Processing Flow of Third Embodiment>

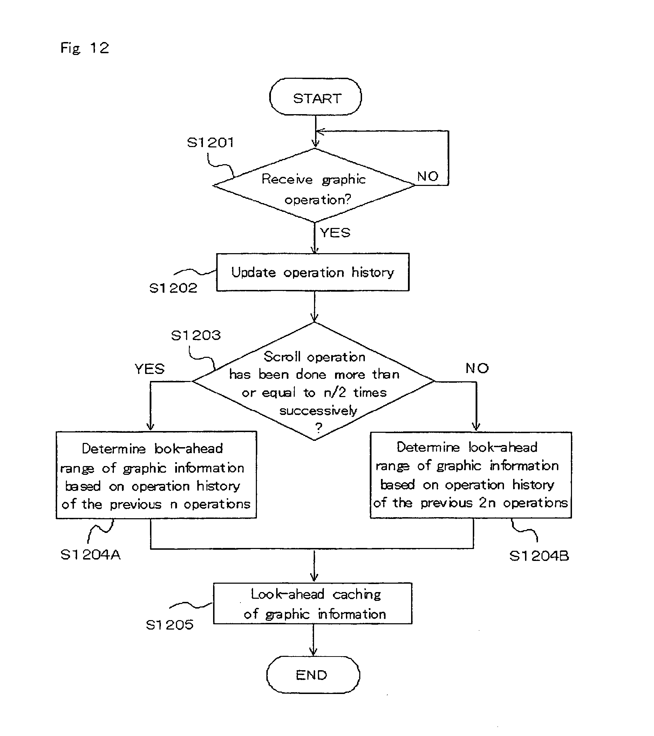

The processes in the display apparatus of the third embodiment include the same steps as those in the first or second embodiment. Fig. 12 is a flowchart showing processes in the display apparatus of the third embodiment. The processes in Fig. 12 include the following steps. At the outset, in step S1201, it is determined whether the graphic operation has been received. Here, if an operation not concerning graphic has been received, it can be determined that the graphic operation has not been received. Here, if it is determined that the graphic operation has been received, step S1202 is carried out. If it is determined that the graphic operation has not been received, the processing stays in a standby state. This processing is mainly carried out by the graphic operator. In step S1202, the operation history is updated based on the received graphic operation information.

In step S1203, it is determined based on the operation history that the scaling operation has been done more than or equal to n/2 times among the previous n operations (e.g., 10 times). If so, step S1204A is carried out. If not, step S1204B is carried out. In step S1204A, the look-ahead range is determined based on the operation history of previous n operations. In step S0904B, the look-ahead range is determined based on the operation history of previous 2n operations. Therefore, when there is a strong tendency to execute the scaling operation, by utilizing comparatively recent operation history, the strong tendency is effectively reflected on the look-ahead range. This processing is mainly carried out by the determination unit for look-ahead range. In step S0905, look-ahead caching of the graphic information is carried out. This processing is mainly carried out by the look-ahead cache.

### <Brief Description of Effects of Third Embodiment>

According to the display apparatus of the third embodiment, the subsequent operation is predicted based on the operations executed for the graphic in the past, and the look-ahead caching of the graphic information, which can be used for the display in the future, is executed, thereby enabling smooth display of the graphic in response to the successive and high-speed operations without sufficient capacity of storage area in a memory to store the cache information.

### <<Fourth Embodiment>>

### <Concept of Fourth Embodiment>

A display apparatus of a fourth embodiment is basically same as that of any one of the first to third embodiments, and is different from those of the first to third embodiments in storing the number of operations with respect to each operation executed by the graphic operator as the operation history.

### <Configuration of Fourth Embodiment>

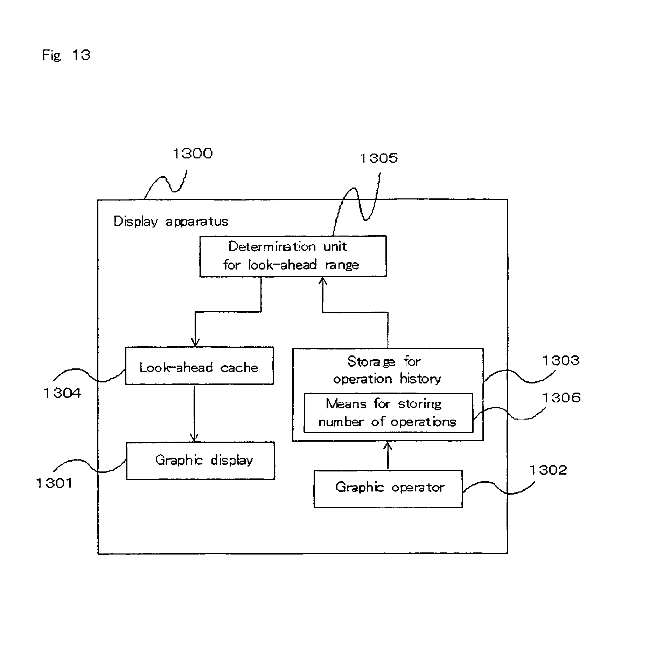

Fig. 13 is a functional block diagram of a display apparatus of the fourth embodiment. A 'display apparatus' 1300 of the fourth embodiment comprises a 'graphic display' 1301, a 'graphic operator' 1302, a 'storage for operation history' 1303, a 'look-ahead cache' 1304, and a 'determination unit for look-ahead range' 1305. The 'storage for operation history' comprises 'means for storing number of operations' 1306. The other configurations are basically same as those of the apparatus of any one of the first to third embodiments, so that only the means for storing number of operations is different from the first to third embodiments, and description thereof is provided hereinbelow.

The 'means for storing number of operations' is configured to store the number of operations with respect to each operation executed by the graphic operator as the operation history. By storing the number of operations with respect to each operation, for example, it is possible to determine the proportion of each operation among the total number of operations, thereby determining the look-ahead caching range of the graphic information based on this proportion. As to the number of operations, it is not necessary to carry out storing as to all operations, and it is possible to carry out storing as to only a specific operation. For example, even the operation concerning graphic, when there is no necessity of acquiring new graphic information, the operation may not be acquired. Moreover, it is possible to group the respective operations (e.g., a group of operations for instructing direction, a group of operations for scaling, or a group of operations for inputting text), and to store the number of operations for each group. Moreover, it is possible to carry out setting as to how many previous operations are stored.

### <Concrete Configuration of Fourth Embodiment>

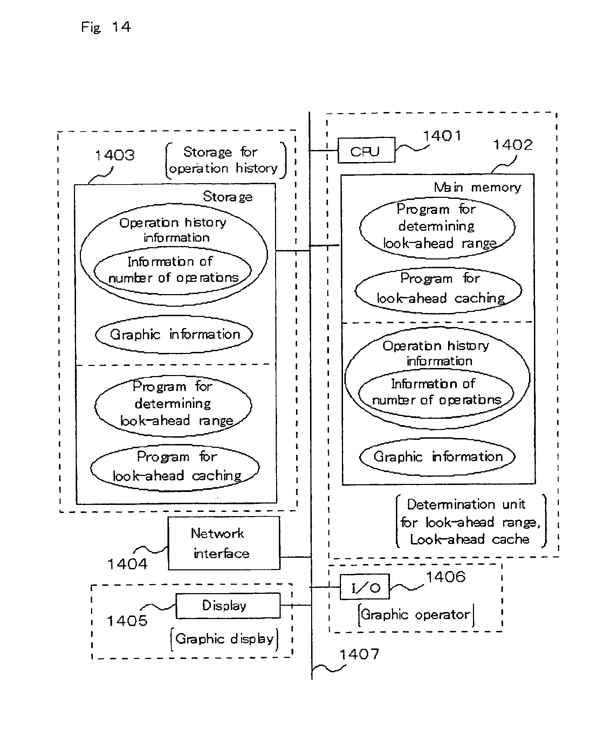

Fig. 14 is a schematic diagram showing an example of a hardware configuration of the display apparatus of the fourth embodiment. The configuration is basically the same as that of the apparatus of the first embodiment described with reference to Fig. 4. However, the apparatus of the fourth embodiment stores the number of operations with respect to each operation as the operation history.

In cases where the graphic operation is executed through the I/O, the CPU executes a process for updating the operation history information of the detail of operations. Here, in order to reduce writing time as much as possible, necessary operation information may be temporarily stored on the main memory, and may be written with respect to each predetermined number of operations.

For example, when it is determined that the processing for updating the operation history is executed by the CPU, the program for determining look-ahead range causes the CPU to execute calculation for determining the look-ahead range based on the numerical data of the new operation history information stored in the main memory. In the calculation, rates of execution of each operation is calculated based on the number of operations stored as the operation history, and further carries out calculation, so that the look-ahead range is allocated to the graphic information correlated with each operation in proportion to the rates. The determination of look-ahead range may be executed with respect to each operation, and may be executed with respect to each predetermined number of operations.

Other concrete configurations are the same as those of the display apparatus of any one of the first to third embodiments, so that descriptions are omitted.

### <Processing Flow of Fourth Embodiment>

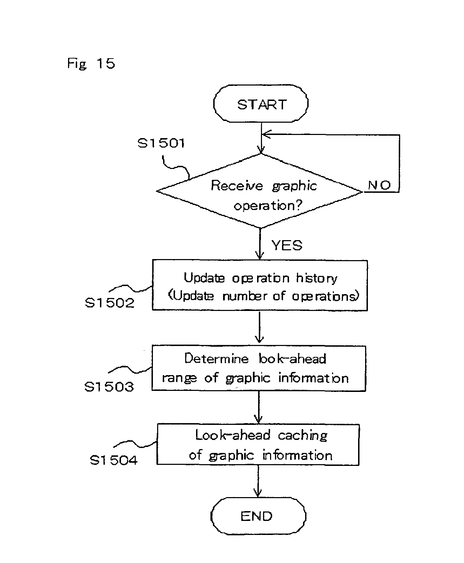

Fig. 15 is a flowchart showing processes in the display apparatus of the fourth embodiment. The processes in Fig. 15 include the following steps. At the outset, in step S1501, it is determined whether the graphic operation has been received. Here, if an operation not concerning a graphic has been received, it can be determined that the graphic operation has not been received. Here, if it is determined that the graphic operation has been received, step S1502 is carried out. If it is determined that the graphic operation has not been received, the processing stays in a standby state. This processing is mainly carried out by the graphic operator. In step S1502, the operation history including the number of operations is updated based on the received graphic operation information. In step S1503, the look-ahead range of the graphic information, which can be used for display, is determined according to the operation history. This processing is mainly carried out by the determination unit for look-ahead range. In step S1504, look-ahead caching of the graphic information is carried out. This processing is mainly carried out by the look-ahead cache.

### <Brief Description of Effects of Fourth Embodiment>

According to the display apparatus of the fourth embodiment, the subsequent operation is predicted based on the operation history including the number of operations with respect to each operation for the graphic, and the look-ahead caching of the graphic information, which can be used for the display in the future, is executed, thereby enabling smooth display of the graphic in response to the successive and high-speed operations without sufficient capacity of storage area in a memory to store the cache information.

### <<Fifth Embodiment>>

### <Concept of Fifth Embodiment>

A display apparatus of a fifth embodiment is basically the same as that of any one of the first to fourth embodiments, and is different from those of the first to fourth embodiments in storing elapsed time between operations.

### <Configuration of Fifth Embodiment>

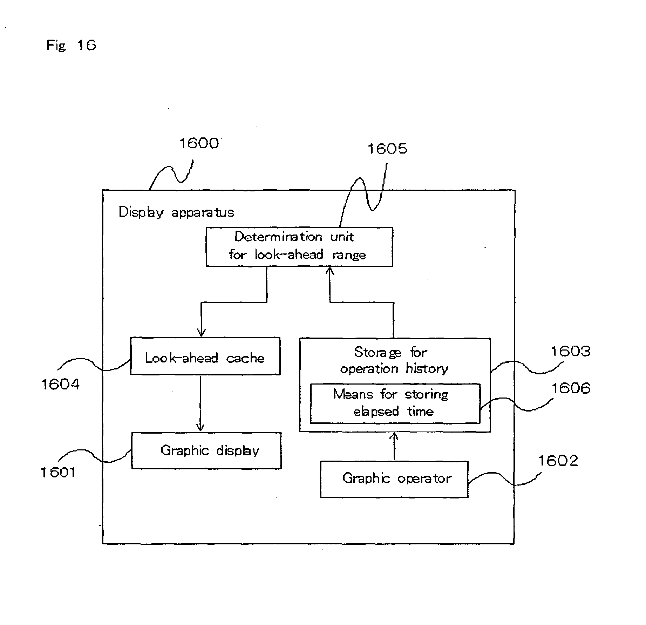

Fig. 16 is a functional block diagram of a display apparatus of the fifth embodiment. A 'display apparatus' 1600 of the fifth embodiment comprises a 'graphic display' 1601, a 'graphic operator' 1602, a 'storage for operation history' 1603, a 'look-ahead cache' 1604, and a 'determination unit for look-ahead range' 1605. The 'storage for operation history' comprises 'means for storing elapsed time' 1606. The other configurations are basically same as those of the apparatus of any one of the first to fourth embodiments, so that only the means for storing elapsed time is different from the first to fourth embodiments, and description thereof is provided hereinbelow.

The 'means for storing elapsed time' is configured to store elapsed-time between operations executed by the graphic operator as the operation history. Generally, prediction performance for a subsequent operation based on the past operation history varies with elapsed time. For example, when executing an operation successively in the last minute, it is predicted that the subsequent operation is to be the same as the previous operation in the last minute. However, when executing the subsequent operation after passage of an extended period of time from the successive execution of the previous operation, in comparison with the above case, the possibility of executing the same operation as the previous operation is low, and the prediction performance based on the operation history decreases.

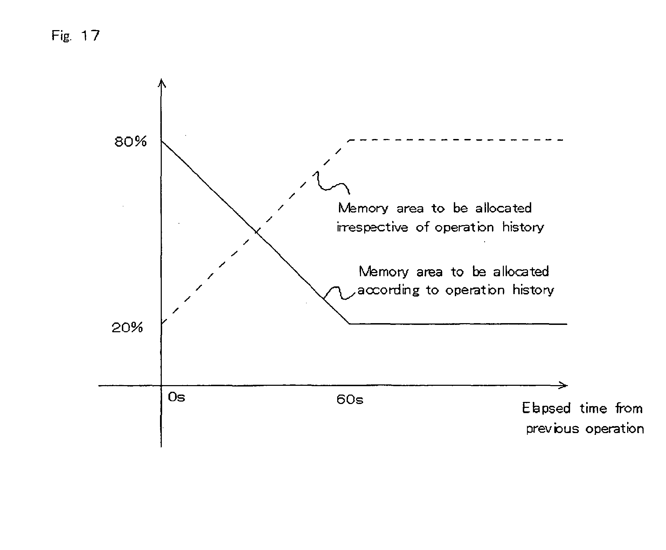

When the elapsed-time between the respective operations is stored as the operation history, the determination unit for look-ahead range can gradually decrease the effect of the operation history based on the elapsed-time between the respective operations, thereby determining the look-ahead range. For example, as shown in Fig. 17, the area in the cache memory allocated according to the operation history is gradually decreased in a linear-functional manner by using the elapsed time as a variable. In this case, at the point of execution of the previous operation, the area allocated according to the operation history is 80%, and the area allocated irrespective of the operation history is 20%. The above allocation varies with the elapsed time, and after a lapse of 60 seconds, it is fixed that the area allocated according to the operation history is 80%, and the area allocated irrespective of the operation history is 20%. Therefore, it is possible to secure minimum cache area for the graphic information correlated with each operation, and to allocate the cache memory area according to the operation history and the elapsed time.

### <Concrete Configuration of Fifth Embodiment>

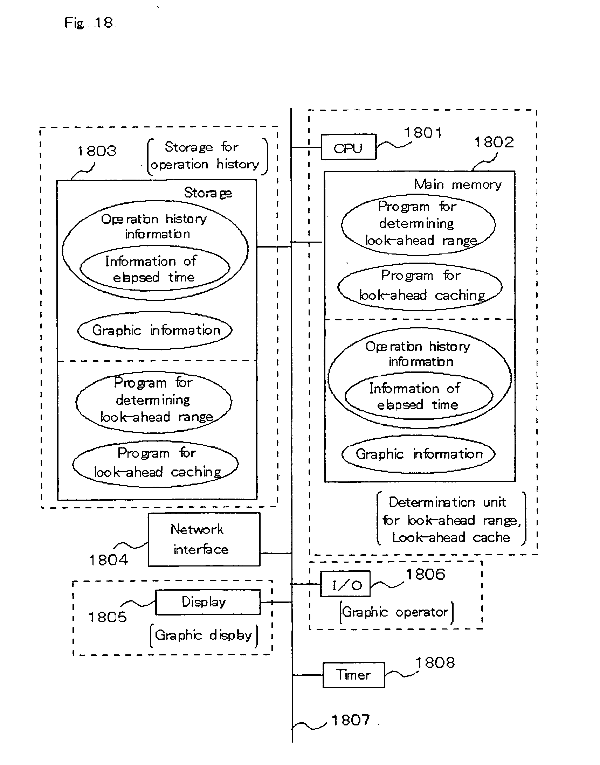

Fig. 18 is a schematic diagram showing an example of a hardware configuration of the display apparatus of the fifth embodiment. The configuration is basically the same as that of the apparatus of the first embodiment described with reference to Fig. 4. However, the apparatus of the fifth embodiment comprises a 'timer' 1808 for measuring the elapsed-time between the respective operations, and stores the elapsed time information, information of elapsed time between the respective operations, as the operation history.

In cases where the graphic operation is executed through the I/O, the CPU executes a process for updating the operation history information of details of new operation and the elapsed time acquired from the timer. Here, in order to reduce writing time as much as possible, necessary operation information may be temporarily stored on the main memory, and may be written with respect to each predetermined number of operations.

For example, when it is determined that the processing for updating the operation history is executed by the CPU, the program for determining look-ahead range causes the CPU to execute calculation for determining the look-ahead range based on the numerical data of the new operation history information stored in the main memory. Here, it is possible to calculate, so that effect of the operation history is gradually decreased based on the elapsed-time between the respective operations. The determination of look-ahead range may be executed with respect to each operation, and may be executed with respect to each predetermined number of operations.

Other concrete configurations are the same as those of the display apparatus of any one of the first to fourth embodiments, so that descriptions are omitted.

### <Processing Flow of Fifth Embodiment>

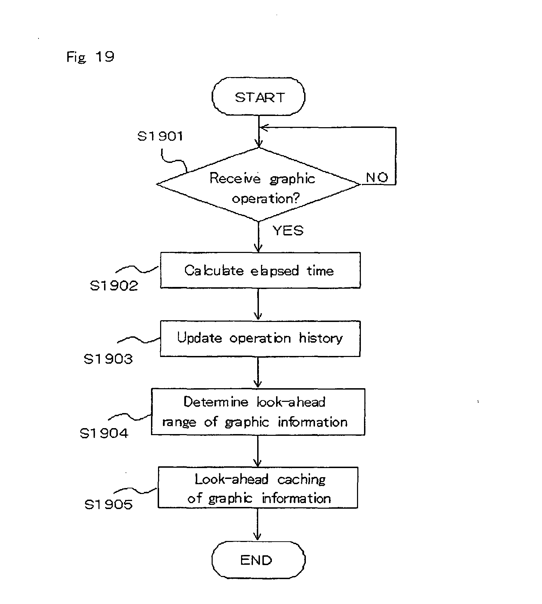

Fig. 19 is a flowchart showing processes in the display apparatus of the fifth embodiment. The processes in Fig. 19 include the following steps. At the outset, in step S 1901, it is determined whether the graphic operation has been received. Here, if an operation not concerning graphic has been received, it can be determined that the graphic operation has not been received. Here, if it is determined that the graphic operation has been received, step S1902 is carried out. If it is determined that the graphic operation has not been received, the processing is terminated. This processing is mainly carried out by the graphic operator. In step S1902, elapsed-time from execution of the previous operation to execution of the current operation is calculated. In step S1903, the operation history is updated based on the received graphic operation information and the elapsed time. In step S1904, the look-ahead range of the graphic information, which can be used for display, is determined according to the operation history including the elapsed time. This processing is mainly carried out by the determination unit for look-ahead range. In step S1905, look-ahead caching of the graphic information is carried out. This processing is mainly carried out by the look-ahead cache.

### <Brief Description of Effects of Fifth Embodiment>

According to the display apparatus of the fifth embodiment, the subsequent operation is predicted based on the operation history for the graphic and the elapsed-time between the respective operations, and the look-ahead caching of the graphic information, which can be used for the display in the future, is executed, thereby enabling smooth display of the graphic in response to the successive and high-speed operations without sufficient capacity of storage area in a memory to store the cache information.

### <<Sixth Embodiment>>

### <Concept of Sixth Embodiment>

A display apparatus of a sixth embodiment is basically same as that of any one of the first to fifth embodiments, and is different from those of the first to fifth embodiments in storing shifting rates from one operation to another operation as the operation history.

### <Configuration of Sixth Embodiment>

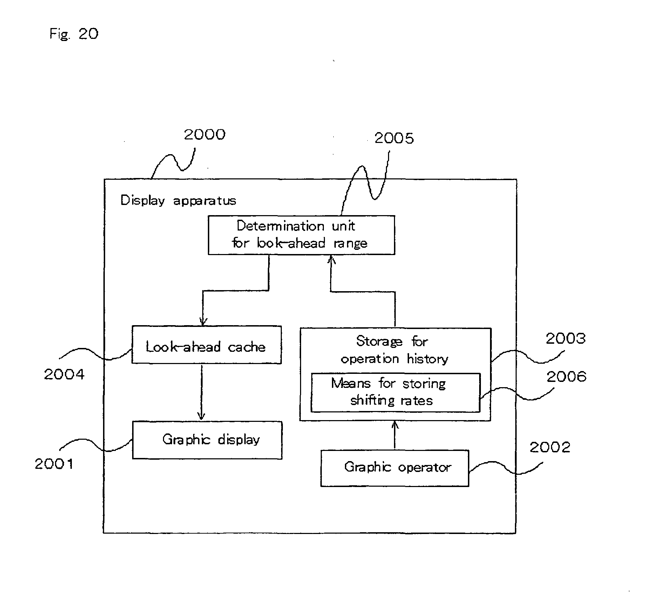

Fig. 20 is a functional block diagram of a display apparatus of the sixth embodiment. A 'display apparatus' 2000 of the sixth embodiment comprises a 'graphic display' 2001, a 'graphic operator' 2002, a 'storage for operation history' 2003, a 'look-ahead cache' 2004, and a 'determination unit for look-ahead range' 2005. The 'storage for operation history' comprises 'means for storing shifting rates' 2006. The other configurations are basically the same as those of the apparatus of any one of the first to fifth embodiments, so that only the means for storing shifting rates is different from the first to fifth embodiments, and description thereof is provided hereinbelow.

The 'means for storing shifting rates' is configured to store rates of shifting the operation from one to another, executed through the graphic operator, as the operation history.

The term 'rates of shifting the operation from one to another, executed through the graphic operator' refers to rates of execution of the other operation after execution of one operation through the graphic operator.

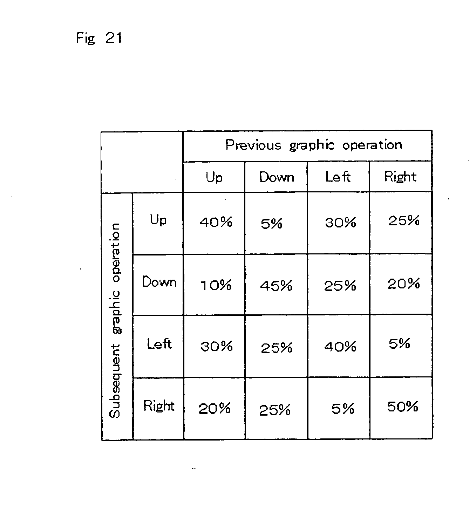

For example, when the user carries out input operation using a keyboard, the information of rates as shown in Fig. 21 can be stored as the operation history information. Here, for the sake of convenience, the 'key operation for moving up and down or right and left' is described as the operation concerning graphic. However, the same applies to other operations such as the 'key operation for scaling up or down' and the 'key operation for rotating the graphic components'. As a method for calculation of the shifting rates, for example, a statistical processing of the operation subsequently executed after execution of one operation based on the past operation history, thereby calculating the sifting rates.

Moreover, for example, the shifting rates with respect to each key group may be included. Specifically, grouping such as a 'group of key operation for moving up and down or right and left', a 'group of key operation for scaling up or down' or a 'group of key operation for editing display content' may be executed, thereby storing the shifting rates between the key operation groups as the operation history.

By storing these shifting rates between the key operation groups as the operation history, it is possible to determine the look-ahead range based on the shifting rates. For example, when one operation is previously executed, it is possible to determine allocation of the cache memory area for the graphic information correlated with the respective operations in proportion to the rates of execution of any subsequent operation from the one operation.

### <Concrete Configuration of Sixth Embodiment>

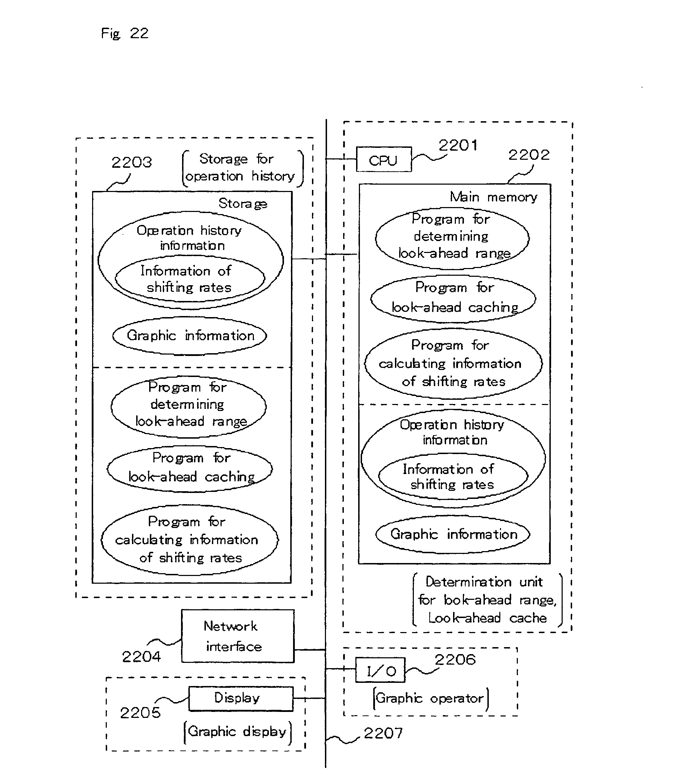

Fig. 22 is a schematic diagram showing an example of a hardware configuration of the display apparatus of the sixth embodiment. The configuration is basically the same as that of the apparatus of the first embodiment described with reference to Fig. 4. However, the apparatus of the sixth embodiment has a program for calculating information of shifting rates, and stores the information of shifting as the operation history.

In cases where the graphic operation is executed through the I/O, the CPU executes a process for updating the operation history information of details of new operation and the elapsed time acquired from the timer. Here, in order to reduce writing time as much as possible, necessary operation information may be temporarily stored on the main memory, and may be written with respect to each predetermined number of operations. The program for calculating information of shifting rates causes the CPU to execute calculation for the information of shifting rates from one operation to the other operation based on the new operation history stored in the main memory, thereby executing a process for writing the shifting rates of the operation history at a predetermined timing.

When it is determined that calculation of the information of shifting rates is executed by the CPU, the program for determining look-ahead range causes the CPU to execute calculation for determining the look-ahead range based on the information of shifting rates stored in the memory. Here, it is possible to execute calculation, so that the look-ahead range is allocated to the graphic information correlated with the respective operations in proportion to the respective shifting rates between operations. The determination of look-ahead range may be executed with respect to each operation, and may be executed with respect to each predetermined number of operations.

Other concrete configurations are the same as those of the display apparatus of any one of the first to fifth embodiments, so that descriptions are omitted.

### <Processing Flow of Sixth Embodiment>

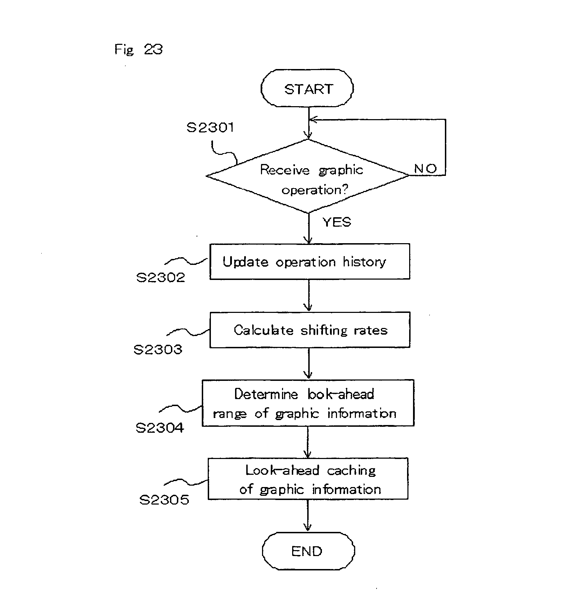

Fig. 23 is a flowchart showing processes in the display apparatus of the sixth embodiment. The processes in Fig. 23 include the following steps. At the outset, in step 2301, it is determined whether the graphic operation has been received. Here, if an operation not concerning graphic has been received, it can be determined that the graphic operation has not been received. Here, if it is determined that the graphic operation has been received, step S2302 is carried out. If it is determined that the graphic operation has not been received, the processing stays in a standby state. This processing is mainly carried out by the graphic operator. In step S2302, the operation history is updated based on the received graphic operation information. In step S2303, the shifting rates between operations is calculated from the operation history, thereby updating the operation history based on the calculated information of shifting rates. In step S2304, the look-ahead range of the graphic information, which can be used for display, is determined according to the operation history including the information of shifting rates. This processing is mainly carried out by the determination unit for look-ahead range. In step S2305, look-ahead caching of the graphic information is carried out. This processing is mainly carried out by the look-ahead cache.

### <Brief Description of Effects of Sixth Embodiment>

According to the display apparatus of the sixth embodiment, the subsequent operation is predicted based on the operation history for the graphic and the shifting rates between operations, and the look-ahead caching of the graphic information, which can be used for the display in the future, is executed, thereby enabling smooth display of the graphic in response to the successive and high-speed operations without sufficient capacity of storage area in a memory to store the cache information.

### <<Seventh Embodiment>>

### <Concept of Seventh Embodiment>

A display apparatus of a seventh embodiment is basically the same as that of any one of the first to sixth embodiments, and is different from those of the first to sixth embodiments in storing a relation between an operation with a screen ID of the operation carried out on the graphic display as the operation history.

### <Configuration of Seventh Embodiment>

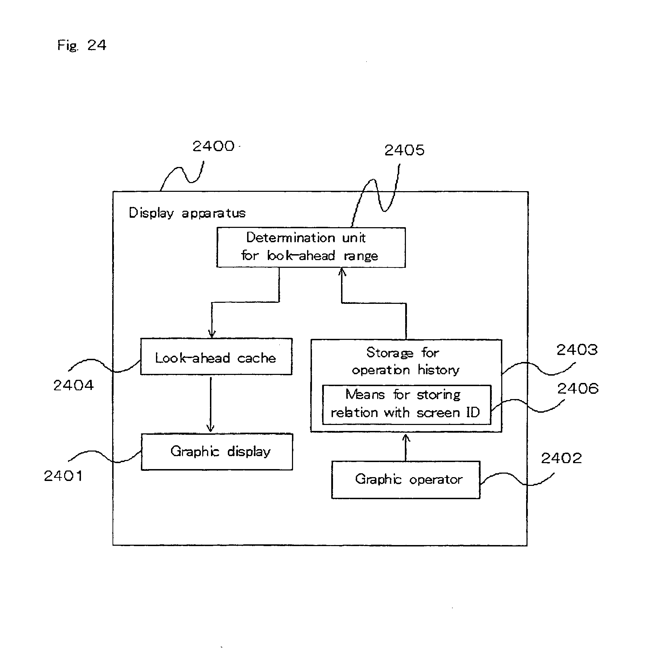

Fig. 24 is a functional block diagram of a display apparatus of the seventh embodiment. A 'display apparatus' 2400 of the seventh embodiment comprises a 'graphic display' 2401, a 'graphic operator' 2402, a 'storage for operation history' 2403, a 'look-ahead cache' 2404, and a 'determination unit for look-ahead range' 2405. The 'storage for operation history' comprises 'means for storing relation with screen ID' 2406. The other configurations are basically the same as those of the apparatus of any one of the first to sixth embodiments, so that only the means for storing relation with screen ID is different from the first to sixth embodiments, and description thereof is provided hereinbelow.

The 'means for storing relation with screen ID' is configured to store a relation between the operation executed through the graphic operator and a screen ID in the graphic display as the operation history. Here, the 'screen ID' corresponds to a symbol etc. for identifying the respective graphics configuring the screen. For example, screen ID is separately assigned to a graphic indicating content list, graphic indicating map information, graphic indicating WEB browser, graphic indicating text editor etc., and a plurality of screen IDs may be contained on one display screen.

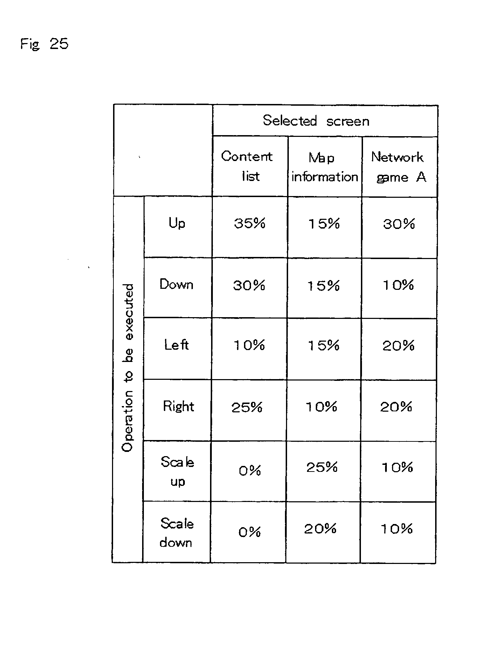

By storing the details of operation and the screen ID of the graphic as a target of the operation as the operation history, for example, it is possible to execute a statistical processing for the operation history, thereby calculating the rate information as shown in Fig. 25. In Fig. 25, when the content list has been selected on the screen, the rates of execution of the scrolling up or down is high, and when the map information has been selected on the screen, the rates of execution of the scaling up or down is high. According to such information, even if the plurality of screen IDs may be contained on one display screen, it is possible to specify the graphic information, to which the cache memory area is preferentially allocated, based on the screen ID. Here, in a method for allocating the cache memory, for example, the allocation may be executed in proportion to the above rates. Note that, in the above example, the relation between the graphic operations and the screen ID of the selected graphic has been described, and a relation between the graphic operation and the screen IDs of the plurality of graphics displayed on the screen may be used.

### <Concrete Configuration of Seventh Embodiment>

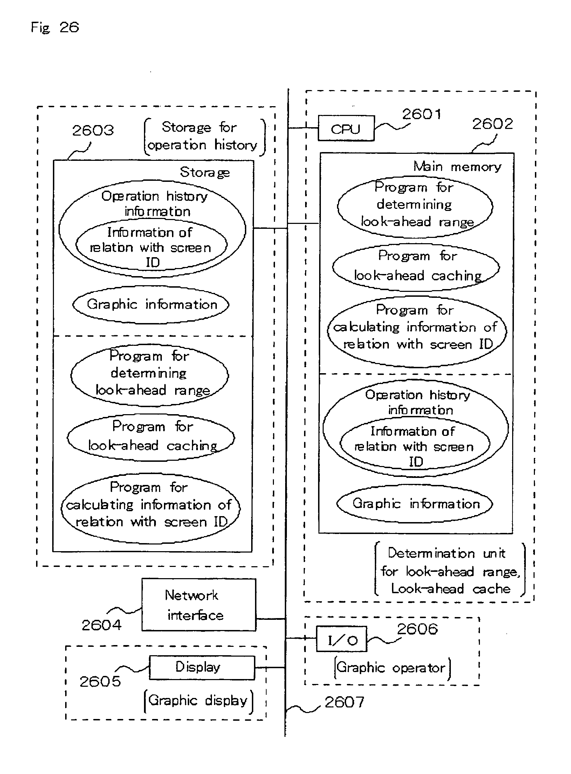

Fig. 26 is a schematic diagram showing an example of a hardware configuration of the display apparatus of the seventh embodiment. The configuration is basically the same as that of the apparatus of the first embodiment described with reference to Fig. 4. However, the apparatus of the seventh embodiment has a program for calculating information of relation with screen ID for calculating the relation between an operation and a screen ID on the display, where the operation has been executed, based on the operation history, and stores the information of relation with screen ID in the storage.

In cases where the graphic operation is executed through the I/O, the CPU executes a process for writing details of new operation and the screen ID of the screen selected upon the operation of the operation history, thereby storing the updated operation history in the storage. Here, in order to reduce writing time as much as possible, necessary operation information may be temporarily stored on the main memory, and may be written with respect to each predetermined number of operations.

Subsequently, the program for calculating information of relation with screen ID causes the CPU to execute calculation of the rates of executing an operation when the graphic indicated by the screen ID has been selected based on the information of operation history stored in the main memory.

When it is determined that calculation of the rates is executed by the CPU, the program for determining look-ahead range causes the CPU to execute calculation for determining the look-ahead range based on the information of rates stored in the memory. Here, it is possible to execute calculation, so that the look-ahead range is allocated to the graphic information correlated with the respective operations in proportion to the rates. The determination of look-ahead range may be executed with respect to each operation, and may be executed with respect to each predetermined number of operations.

Other concrete configurations are the same as those of the display apparatus of any one of the first to sixth embodiments, so that descriptions are omitted.

### <Processing Flow of Seventh Embodiment>

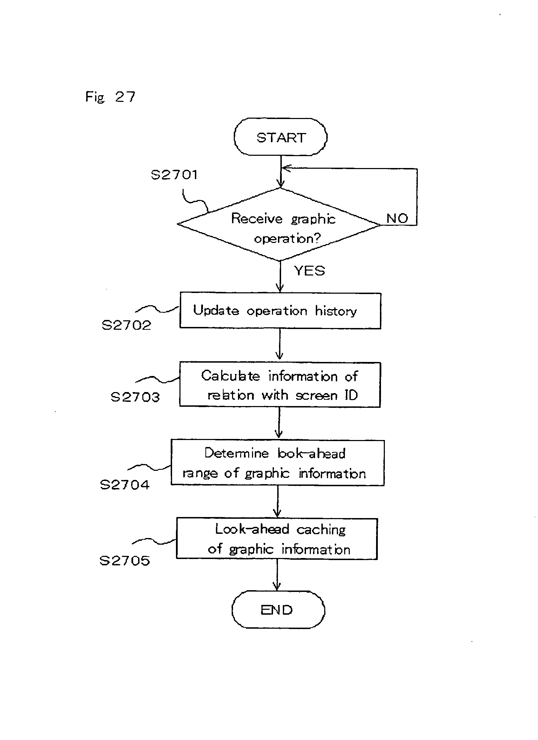

Fig. 27 is a flowchart showing processes in the display apparatus of the seventh embodiment. The processes in Fig. 27 include the following steps. At the outset, in step 2701, it is determined whether the graphic operation has been received. Here, if an operation not concerning graphic has been received, it can be determined that the graphic operation has not been received. Here, if it is determined that the graphic operation has been received, step S2702 is carried out. If it is determined that the graphic operation has not been received, the processing stays in a standby state. This processing is mainly carried out by the graphic operator. In step S2702, the operation history is updated based on the received graphic operation information. In step S2703, the information of rates of executing the respective operations when the screen ID has been selected is calculated from the operation history. In step S2704, the look-ahead range of the graphic information, which can be used for display, is determined based on the above information of rates. This processing is mainly carried out by the determination unit for look-ahead range. In step S2704, look-ahead caching of the graphic information is carried out. This processing is mainly carried out by the look-ahead cache.

### <Brief Description of Effects of Seventh Embodiment>

According to the display apparatus of the seventh embodiment, the subsequent operation is predicted based on the detail of past operation for the graphic and the information of relation with the screen ID of the graphic displayed at the point of graphic operation, and the look-ahead caching of the graphic information, which can be used for the display in the future, is executed, thereby enabling smooth display of the graphic in response to the successive and high-speed operations without sufficient capacity of storage area in a memory to store the cache information.

### <<Eighth Embodiment>>

### <Concept of Eighth Embodiment>

A display apparatus of a eighth embodiment is basically the same as that of any one of the first to seventh embodiments, and is different from those of the first to seventh embodiments in storing a relation between an operation and a screen area, in which a graphic pointer has been located upon the operation, as the operation history.

### <Configuration of Eighth Embodiment>

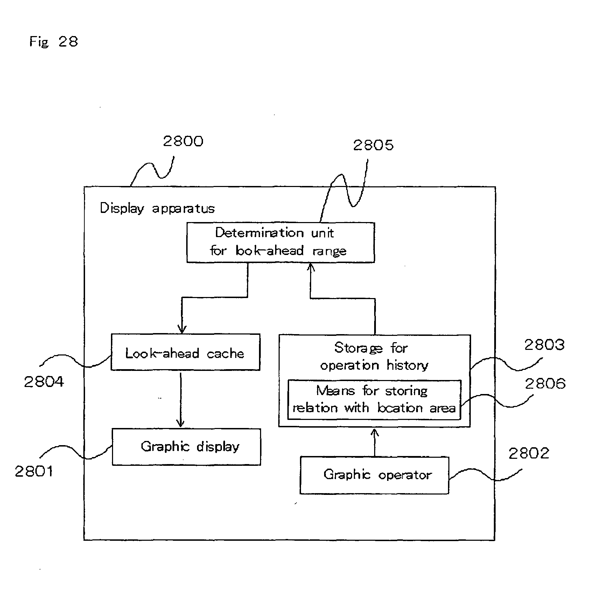

Fig. 28 is a functional block diagram of a display apparatus of the eighth embodiment. A 'display apparatus' 2800 of the eighth embodiment comprises a 'graphic display' 2801, a 'graphic operator' 2802, a 'storage for operation history' 2803, a 'look-ahead cache' 2804, and a 'determination unit for look-ahead range' 2805. The 'storage for operation history' comprises 'means for storing a relation with location area' 2806. The other configurations are basically the same as those of the apparatus of any one of the first to seventh embodiments, so that only the means for storing a relation with location area is different from the first to seventh embodiments, and description thereof is provided hereinbelow.

The 'means for storing a relation with location area' is configured to store a relation between the operation executed through the graphic operator and a screen area, in which a graphic pointer has been located upon the operation, as the operation history.

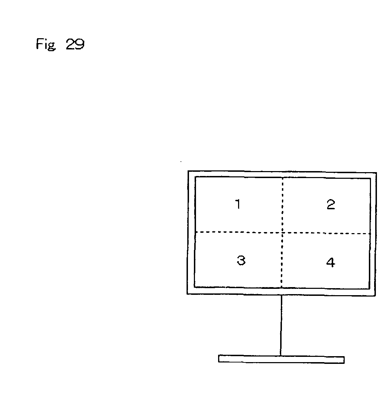

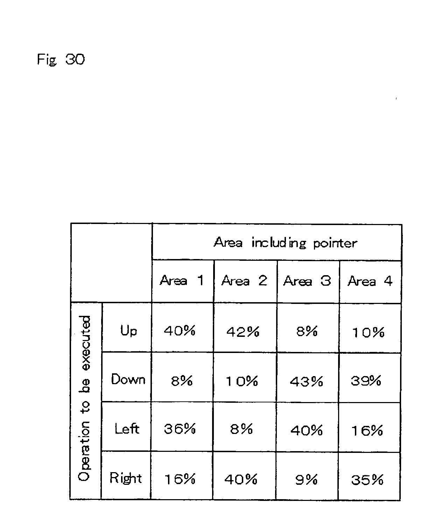

For example, when the screen area is divided into four sections as shown in Fig. 29, and graphic pointers are allocated to the respective divided areas, the number of executions of the respective operations may be stored as the operation history. Here, the dividing may be carried out in various manners, and may not be equally-divided. By executing a statistical processing for the operation history, for example, it is possible to calculate the rates of execution of each operation when the graphic pointers are allocated to an area in the screen area as shown in Fig. 30. Here, for the sake of convenience, the 'key operation for moving up and down or right and left' is described as the operation concerning graphic. However, the same applies to other operations such as the 'key operation for scaling up or down' and the 'key operation for rotating the graphic components'.

When the graphic pointer is located in the screen area 1, the rates of key operation in the direction of leftward or upward is high, and when the graphic pointer is located in the screen area 4, the rates of key operation in the direction of rightward or downward is high. Thus, when there is significant relation between each screen area and each operation, the cache memory is allocated to the graphic information correlated with each operation in proportion to the above rates, thereby enabling cache of the graphic information according to the location of the graphic pointer.

### <Concrete Configuration of Eighth Embodiment>

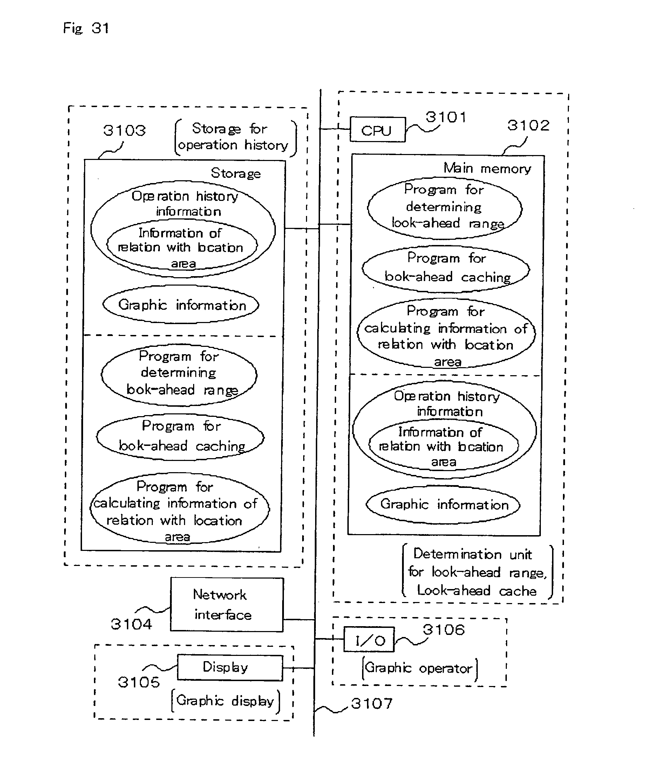

Fig. 31 is a schematic diagram showing an example of a hardware configuration of the display apparatus of the eighth embodiment. The configuration is basically the same as that of the apparatus of the first embodiment described with reference to Fig. 4. However, the apparatus of the eighth embodiment has a program for calculating a relation between an operation and a screen area, in which a graphic pointer has been located upon the operation, from the operation history, and stores the information of relation with location area.

In cases where the graphic operation is executed through the I/O, the CPU executes a process for writing the location information of the graphic pointer in the screen area of the operation history, thereby storing the updated operation history in the storage. Here, in order to reduce writing time as much as possible, necessary operation information may be temporarily stored on the main memory, and may be written with respect to each predetermined number of operations.

Subsequently, the program for calculating information of relation with location area causes the CPU to execute calculation of the rates of executing an operation when the graphic pointer is located in an area based on the information of operation history stored in the main memory.

When it is determined that calculation of the rates is executed by the CPU, the program for determining look-ahead range causes the CPU to execute calculation for determining the look-ahead range based on the information of rates stored in the memory. Here, it is possible to execute calculation, so that the look-ahead range is allocated to the graphic information correlated with the respective operations in proportion to the rates. The determination of look-ahead range may be executed with respect to each operation, and may be executed with respect to each predetermined number of operations.

Other concrete configurations are the same as those of the display apparatus of any one of the first to seventh embodiments, so that descriptions are omitted.

### <Processing Flow of Eighth Embodiment>

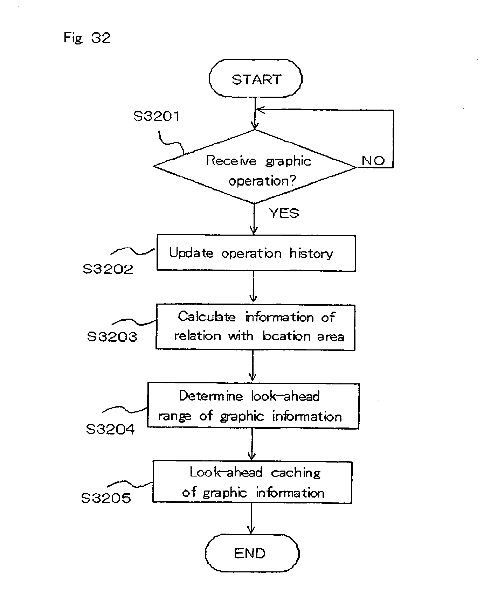

Fig. 32 is a flowchart showing processes in the display apparatus of the eighth embodiment. The processes in Fig. 32 include the following steps. At the outset, in step 3201, it is determined whether the graphic operation has been received. Here, if an operation not concerning graphic has been received, it can be determined that the graphic operation has not been received. Here, if it is determined that the graphic operation has been received, step S3202 is carried out. If it is determined that the graphic operation has not been received, the processing stays in a standby state. This processing is mainly carried out by the graphic operator. In step S3202, the operation history is updated based on the received graphic operation information. In step S3203, the information of rates of executing the respective operations when the graphic pointer is located in an area is calculated from the operation history. In step S3204, the look-ahead range of the graphic information, which can be used for display, is determined based on the above information of rates. This processing is mainly carried out by the determination unit for look-ahead range. In step S3205, look-ahead caching of the graphic information is carried out. This processing is mainly carried out by the look-ahead cache.

### <Brief Description of Effects of Eighth Embodiment>

According to the display apparatus of the eighth embodiment, the subsequent operation is predicted based on the detail of past operation for the graphic and the information of relation with the screen area, where the graphic pointer has been located at the point of graphic operation, and the look-ahead caching of the graphic information, which can be used for the display in the future, is executed, thereby enabling smooth display of the graphic in response to the successive and high-speed operations without sufficient capacity of storage area in a memory to store the cache information.

## Claims

1. A display apparatus (1600), comprising:
a graphic display (1601, 1805);
a graphic operator (1602, 1806), receiving an operation concerning a graphic displayed by the graphic display (1601, 1805);
a storage (1603, 1803) for operation history, storing operation history of the graphic;
a look-ahead cache (1604, 1802), carrying out look-ahead caching of graphic information which can be used for display through the graphic operation; and
a determination unit (1605, 1802) for look-ahead range, determining information range to be looked ahead according to the operation history
**characterized in that**
the storage (1603, 1803) for operation history comprises
means (1606, 1802) for storing elapsed time, storing elapsed-time between operations executed by the graphic operator as the operation history and that
the determination unit (1605, 1802) is operable to determine the look-ahead range additionally according to the elapsed time.

2. The display apparatus according to claim 1, wherein
the determination unit (1605, 1802) is operable to decrease the effect of the operation history based on the elapsed-time between operations, thereby determining the look-ahead range.

3. The display apparatus according to Claim 1,
wherein the look-ahead cache (1604, 1802) comprises
means (0606) for caching with respect to each scroll direction, carrying out look-ahead caching of graphic information for displaying a graphic, which newly appears at some point while scrolling, when the graphic operation is scrolling in a direction of right to left or up and down or a combination of these directions.

4. The display apparatus (1600) according to any of Claims 1 to 3,
wherein the look-ahead cache comprises
means (1006) for caching in scaling, carrying out look-ahead caching of graphic information for displaying a graphic, which newly appears at some point while scaling, when the graphic operation is scaling of the graphic.

5. The display apparatus (1600) according to any one of Claims I to 4,
wherein the storage for operation history comprises
means (1306) for storing number of operations, storing number of operations with respect to each operation executed by the graphic operator as the operation history.

6. The display apparatus (1600) according to any one of Claims 1 to 5,
wherein the storage for operation history comprises
means (2006) for storing shifting rates, storing rates of shifting an operation from one to another, executed through the graphic operator, as the operation history.

7. The display apparatus (1600) according to any one of Claims 1 to 6,
wherein the storage for operation history comprises
means (2406) for storing a relation with screen ID, storing a relation between an operation executed through the graphic operator and a screen ID in the graphic display as the operation history.

8. The display apparatus (1600) according to any one of Claims 1 to 7,
wherein the storage for operation history comprises
means (2806) for storing a relation with location area, storing a relation between the operation executed through the graphic operator and an screen area, in which a graphic pointer has been located upon the operation, as the operation history.

9. A display method, comprising the steps of:
displaying a graphic;
operating the graphic in order to receive an operation of the graphic to be displayed by the step of displaying graphic;
storing an operation history of the graphic;
look-ahead caching of graphic information, which can be used for display through the graphic operation; and
determining information range to be looked ahead according to the operation history, **characterized in that**
storing the operation history of the graphic comprises storing an elapsed time between respective operations and the information range to be looked ahead is determined additionally according to the elapsed time.

## Patentansprüche

1. Anzeigeeinrichtung (1600), die enthält:
eine Graphikanzeige (1601, 1805);
einen Graphikoperator (1602, 1806), der einen Vorgang, der eine durch die Graphikanzeige (1601, 1805) angezeigte Graphik betrifft, empfängt;
einen Speicher (1603, 1803) für die Vorgangshistorie, der die Vorgangshistorie der Graphik speichert;
einen Vorausschau-Cache (1604, 1802), der Vorausschau-Caching von Graphikinformationen, die für die Anzeige durch den Graphikvorgang verwendet werden können, ausführt; und
eine Bestimmungseinheit (1605, 1802) für den Vorausschau-Bereich, der den Informationsbereich bestimmt, der gemäß der Vorgangshistorie vorauszuschauen ist,
**dadurch gekennzeichnet, dass**
der Speicher (1603, 1803) für die Vorgangshistorie enthält:
Mittel (1606, 1802) zum Speichern der abgelaufenen Zeit, der die Zeit, die zwischen durch den Graphikoperator ausgeführten Vorgängen abgelaufen ist, als die Vorgangshistorie speichert, und dass
die Bestimmungseinheit (1605, 1802) betreibbar ist, den Vorausschau-Bereich zusätzlich gemäß der abgelaufenen Zeit zu bestimmen.

2. Anzeigeeinrichtung nach Anspruch 1, wobei
die Bestimmungseinheit (1605, 1802) betreibbar ist, die Auswirkungen der Vorgangshistorie aufgrund der zwischen Vorgängen abgelaufenen Zeit zu verringern, wodurch der Vorausschau-Bereich bestimmt wird.

3. Anzeigeeinrichtung nach Anspruch 1,
wobei der Vorausschau-Cache (1604, 1802) enthält:
Mittel (0606) zum Caching in Bezug auf jede Scrollrichtung, die Vorausschau-Caching von Graphikinformationen zum Anzeigen einer Graphik ausführen, die neu an irgendeinem Punkt während des Scrollings erscheint, wenn der Graphikvorgang in einer Richtung von rechts nach links oder nach oben und unten oder in einer Kombinationen dieser Richtungen scrollt.

4. Anzeigeeinrichtung (1600) nach einem der Ansprüche 1 bis 3,
wobei der Vorausschau-Cache enthält:
Mittel (1006) zum Caching in der Skalierung, die Vorausschau-Caching von Graphikinformationen zum Anzeigen einer Graphik ausführen, die neu an irgendeinem Punkt während der Skalierung erscheint, wenn der Graphikvorgang die Graphik skaliert.

5. Anzeigeeinrichtung (1600) nach einem der Ansprüche 1 bis 4,
wobei der Speicher für die Vorgangshistorie enthält:
Mittel (1306) zum Speichern einer Anzahl von Vorgängen, der eine Anzahl von Vorgängen in Bezug auf jeden durch den Graphikoperator ausgeführten Vorgang als die Vorgangshistorie speichert.

6. Anzeigeeinrichtung (1600) nach einem der Ansprüche 1 bis 5,
wobei der Speicher für die Vorgangshistorie enthält:
Mittel (2006) zum Speichern von Umschaltungsraten, der Raten des Umschaltens eines Vorgangs von einem zum anderen, der durch den Graphikoperator ausgeführt wird, als die Vorgangshistorie speichert.

7. Anzeigeeinrichtung (1600) nach einem der Ansprüche 1 bis 6,
wobei der Speicher für die Vorgangshistorie enthält:
Mittel (2406) zum Speichern einer Beziehung mit einer Bildschirm-ID, die eine Beziehung zwischen einem durch den Graphikoperator ausgeführten Vorgang und einer Bildschirm-ID in der Graphikanzeige als die Vorgangshistorie speichern.

8. Anzeigeeinrichtung (1600) nach einem der Ansprüche 1 bis 7,
wobei der Speicher für die Vorgangshistorie enthält:
Mittel (2806) zum Speichern einer Beziehung mit einem Lokalisierungsbereich, die eine Beziehung zwischen dem durch den Graphikoperator ausgeführten Vorgang und einem Bildschirmbereich, in den der Graphikzeiger nach dem Vorgang positioniert wurde, als die Vorgangshistorie speichert.

9. Anzeigeverfahren, das die Schritte enthält:
Anzeigen einer Graphik;
Betreiben der Graphik, um einen Vorgang der durch den Schritt des Anzeigens der Graphik anzuzeigenden Graphik zu empfangen;
Speichern einer Vorgangshistorie der Graphik;
Ausführen eines Vorausschau-Cachings der Graphikinformationen, die für die Anzeige durch den Graphikvorgang verwendet werden können; und
Bestimmen eines Informationsbereichs, der gemäß der Vorgangshistorie vorauszuschauen ist, **dadurch gekennzeichnet, dass**
das Speichern der Vorgangshistorie der Graphik das Speichern einer abgelaufenen Zeit zwischen jeweiligen Vorgängen enthält und der Informationsbereich, der vorauszuschauen ist, zusätzlich gemäß der abgelaufenen Zeit bestimmt wird.

## Revendications

1. Appareil d'affichage (1600) comprenant :
un afficheur graphique (1601 ; 1805) ;
un opérateur graphique (1602 ; 1806) recevant une opération concernant un graphique affiché par l'afficheur graphique (1601 ; 1805) ;
une mémoire (1603 ; 1803) pour un historique des opérations, stockant un historique des opérations du graphique ;
une antémémoire à lecture anticipée (1604, 1802) effectuant une antémémorisation à lecture anticipée d'informations graphiques qui peuvent être utilisées en vue d'un affichage par l'intermédiaire de l'opération graphique ; et
une unité de détermination (1605, 1802) pour une plage de lecture anticipée, déterminant une plage d'informations devant faire l'objet d'une lecture anticipée en fonction de l'historique d'informations
**caractérisé en ce que**
la mémoire (1603, 1803) pour un historique des opérations comprend
des moyens (1606, 1802) pour mémoriser un temps écoulé, mémorisant un temps écoulé entre des opérations exécutées par l'opérateur graphique en tant qu'historique des opérations et **en ce que**
l'unité de détermination (1605, 1802) est apte à déterminer en plus la plage de lecture anticipée selon le temps écoulé.

2. Appareil d'affichage conformément à la revendication 1, dans lequel
l'unité de détermination (1605, 1802) est apte à diminuer l'effet de l'historique des opérations sur la base du temps écoulé entre des opérations, ce qui permet de déterminer la plage de lecture anticipée.

3. Appareil d'affichage conformément à la revendication 1,
dans lequel l'antémémoire à lecture anticipée (1604, 1802) comprend
des moyens (0606) pour une antémémorisation relativement à chaque direction de défilement, effectuant une antémémorisation à lecture anticipée d'informations graphiques pour afficher un graphique, apparaissant nouvellement à un moment au cours du défilement, lorsque l'opération graphique est un défilement dans une direction allant de gauche à droite ou de haut en bas ou dans les deux directions combinées.

4. Appareil d'affichage (1600) conformément à l'une quelconque des revendications 1 à 3,
dans lequel l'antémémoire à lecture anticipée comprend
des moyens (1006) pour une antémémorisation lors d'une mise à l'échelle, effectuant une antémémorisation à lecture anticipée d'informations graphiques pour afficher un graphique, apparaissant nouvellement à un moment au cours d'une mise à l'échelle, lorsque l'opération graphique est une mise à l'échelle du graphique.

5. Appareil d'affichage (1600) conformément à l'une quelconque des revendications 1 à 4,
dans lequel la mémoire pour un historique des opérations comprend
des moyens (1306) pour mémoriser le nombre d'opérations, mémorisant le nombre d'opérations relativement à chaque opération exécutée par l'opérateur graphique en tant qu'historique des opérations.

6. Appareil d'affichage (1600) conformément à l'une quelconque des revendications 1 à 5,
dans lequel la mémoire pour un historique des opérations comprend
des moyens (2006) pour mémoriser des taux de changement, mémorisant des taux de changement d'une opération à une autre, exécutée par l'intermédiaire de l'opérateur graphique, en tant qu'historique des opérations.

7. Appareil d'affichage (1600) conformément à l'une quelconque des revendications 1 à 6,
dans lequel la mémoire pour un historique des opérations comprend
des moyens (2406) pour mémoriser une relation avec un identifiant ID, mémorisant une relation entre une opération exécutée par l'intermédiaire de l'opérateur graphique et un ID d'écran dans l'afficheur graphique en tant qu'historique des opérations.

8. Appareil d'affichage (1600) conformément à l'une quelconque des revendications 1 à 7,
dans lequel la mémoire pour un historique des opérations comprend
des moyens (2806) pour mémoriser une relation avec une zone d'emplacement, mémorisant une relation entre l'opération exécutée par l'intermédiaire de l'opérateur graphique et une zone d'écran, dans laquelle un pointeur graphique a été placé lors de l'opération, en tant qu'historique des opérations.

9. Procédé d'affichage comprenant les étapes :
d'affichage d'un graphique ;
de mise en oeuvre du graphique de manière à recevoir une opération du graphique à afficher par l'étape d'affichage de graphique ;
de mémorisation d'un historique des opérations du graphique ;
d'antémémorisation à lecture anticipée d'informations graphiques, lesquelles peuvent être utilisée en vue d'un affichage par l'intermédiaire de l'opération graphique ; et
de détermination d'une plage d'informations devant faire l'objet d'une lecture anticipée en fonction de l'historique des opérations, **caractérisé en ce que**
la mémorisation de l'historique des opérations du graphique comprend la mémorisation d'un temps écoulé entre des opérations respectives et la plage d'informations devant faire l'objet d'une lecture anticipée est en plus déterminée selon le temps écoulé.
